# EUROPEAN PATENT APPLICATION

(11) **EP 4 480 999 A1**
(43) Date of publication of application: **25.12.2024**
(21) Application number: 23180381.8
(22) Date of filing: 20.06.2023
(51) Int. Cl.: C08L 33/06

(54) **IONICALLY CROSSLINKED (METH)ACRYLIC (CO)POLYMERS**

(71) Applicant: Trinseo Europe GmbH, 8808 Pfaeffikon (CH)
(72) Inventor: Balan, Abidin, 8808 Pfaeffikon (CH); Lakeman, Pascal, 8808 Pfaeffikon (CH)
(74) Representative: SSM Sandmair

(57) **Abstract**

A reversibly crosslinkable (meth)acrylic copolymer composition is disclosed. The composition includes a) (meth)acrylic copolymer chains comprising from 60 to 99.9 wt% methyl methacrylate monomer units and 0.01 to 15 wt% of unsaturated acid or anhydride monomer units with pendant acid and/or anhydride groups, and 0.1 to 20 wt% of one or more ionic crosslinking agents having at least one metal cation groups, with a valence of 2 or more. The composition is capable of forming reversible crosslinks between the pendant unsaturated acid or anhydride groups on other polymer chains by ionic bonding or complexation to form a crosslinked copolymer. Another composition includes one or more (meth)acrylic copolymer chains having 0.1 to 20 wt% of one or more unsaturated acids and/or anhydride groups pendant from the copolymer. A portion of the copolymer chains are reversibly crosslinked with other copolymer chains by i) ionic bonding or ii) a complexation.

## Description

### FIELD OF THE INVENTION

The invention relates to (meth)acrylic copolymers that can be ionically crosslinked. The invention also relates to ionically crosslinked (meth)acrylic copolymers where the ionic crosslinks can be reversed.

### BACKGROUND OF THE INVENTION

Thermoplastic polymers and copolymers, especially (meth)acrylic polymers, have excellent characteristics such as transparency, mechanical properties and processability. They are widely used in various fields such as automobile parts, electrical parts, industrial parts, optical materials, various parts of household electrical appliances, aesthetical parts, miscellaneous goods and the like.

Generally, melt strength of an acrylic polymer increases with increasing molecular weight - providing improved mechanical properties, such as resistance to creep, scratch and chemical resistance in thermoplastics. However, as the molecular weight increases, processability generally becomes more difficult. For demanding applications, the property/processability balance lies between those for thermosets and thermoplastics.

Reversible dynamic linkages in polymer networks may bridge the gap between traditional thermosets and thermoplastics while facilitating recyclability and reprocessability. However, the preparation of recyclable polymer crosslinked networks with desired mechanical and thermal stability via economically feasible routes is still an industrial challenge. WO2020115023 describes ionomers of copolymers having vinylidene aromatic monomer and unsaturated compounds with acid groups.

### SUMMARY OF THE INVENTION

In one embodiment, a reversibly crosslinkable (meth)acrylic copolymer composition is provided which includes a) (meth)acrylic copolymer chains comprising from 60 to 99.9 weight percent methyl methacrylate monomer units, and 0.01 to 15 weight percent of unsaturated acid or anhydride monomer units with pendant acid and/or anhydride groups, and b) 0.1 to 20 weight percent of one or more ionic crosslinking agents having at least one metal cation groups, with a valence of 2 or more.

The composition may form reversible crosslinks between the pendant unsaturated acid or anhydride groups on other polymer chains by ionic bonding or complexation to form a crosslinked copolymer.

In another embodiment, a composition is provided which includes one or more (meth)acrylic copolymer chains having 0.1 to 20 weight percent of one or more unsaturated acids and/or anhydrides groups pendant from the copolymer, and where a portion of the copolymer chains are crosslinked with other copolymer chains by i) ionic bonding or ii) a complexation. The crosslinks are capable of being reversed.

### BRIEF DESCRIPTION OF THE DRAWINGS

Figure 1 shows a plot of the storage modulus of the (meth)acrylic-ionomer as a function of temperature compared to non-crosslinked base polymer;
Figure 2 depicts controlled reversibility of (meth)acrylic ionomers produced in-situ during polymerization; and
Figure 3 shows a plot of the full cycle reversibility of (meth)acrylic-ionomers.

### DETAILED DESCRIPTION OF THE INVENTION

"Copolymer" as used herein means a polymer having two or more different monomer units, including copolymers, and polymers with three or more different monomers, such as terpolymers and tetrapolymers. Accordingly, the terms "co-, ter- and tetra-polymer" encompass any polymer having more than one type of comonomer. "Polymer" is used to mean both homopolymer and copolymers. Polymers may be straight chain, branched, star, comb, block, or any other structure. The polymers may be homogeneous, heterogeneous, and may have a gradient distribution of co-monomer units. All references cited are incorporated herein by reference. As used herein, unless otherwise described, percent shall mean weight percent. Molecular weight is a weight average molecular weight as measured by gel permeation chromatography (GPC) using polymethylmethacrylate standards. In cases where the polymer contains some crosslinking, and GPC cannot be applied due to an insoluble polymer fraction, soluble fraction / gel fraction or soluble faction molecular weight after extraction from gel is used to determine weight average molecular weight.

"(Meth)acrylic" or "(meth)acrylate" as used herein denotes both the acrylate and the methacrylate.

By "crosslinked" as used herein is meant that a plurality of the copolymers of the invention are linked to other copolymers of the invention through ionic bonds. The ionic bonds are formed of anions from the unsaturated acid or anhydride groups on the copolymer chain with cations formed from the ionic crosslinking groups, or by complexes of the acid or anhydride groups with metal oxides. The metal oxides and crosslinking groups have a valence of at least two. The valence of at least two means that the metal of the crosslinking groups can form at least two cationic species. These cationic species can form bonds with anions, or can complex with at least two acid and/or anhydride groups. The copolymers of the invention may form two or more crosslinks with other copolymers.

The reversible crosslinkable (meth)acrylic copolymer composition of the claims contains a (meth)acrylic copolymers having pendant acid and/or anhydride groups, and one or more ionic crosslinking groups. Once crosslinked, the (meth)acrylic-ionomers possess both high melt strength and processability by altering the apparent molecular weight via reversible bonds.

### (Meth)acrylic copolymer:

The (meth)acrylic copolymer contains from 0.01 to 20, preferably from 0.1 to 15 weight percent of one or more unsaturated acid and/or anhydride monomer units, where the acid and/or anhydride groups are pendant from the copolymer. Examples of suitable acid or anhydride monomer units include, but are not limited to acrylic acid, methacrylic acid, itaconic acid, maleic anhydride, vinyl benzoic acid, maleic acid, fumaric acid, 4-styrene sulfonic acid

In a preferred embodiment of the invention the copolymer contains at least 50 weight percent of methyl methacrylate monomer units, preferably at least 70 weight percent and more preferably at least 80 weight percent methyl methacrylate monomer units are in the copolymer.

In some embodiments, the copolymer of the invention, in addition to the acid and/or anhydride monomer(s), and methyl methacrylate, may include 0 to 49.5 weight percent of other acrylate and methacrylate monomers or other ethylenically unsaturated monomers, included but not limited to, styrene, alpha methyl styrene, acrylonitrile, and crosslinkers at low levels may also be present in the monomer mixture. Suitable acrylate and methacrylate comonomers include, but are not limited to, methyl acrylate, ethyl acrylate and ethyl methacrylate, butyl acrylate and butyl methacrylate, iso-octyl methacrylate and iso-octyl acrylate, lauryl acrylate and lauryl methacrylate, stearyl acrylate and stearyl methacrylate, isobornyl acrylate and isobornyl methacrylate, methoxy ethyl acrylate and methoxy methacrylate, 2-ethoxy ethyl acrylate and 2-ethoxy ethyl methacrylate, and dimethylamino ethyl acrylate and dimethylamino ethyl methacrylate monomers. In addition to the acid and/or anhydride functionality, other functionality can be added to the (meth)acrylic copolymer through functional comonomers, including epoxy (such as glycidyl methacrylate), and hydroxyl groups. Functional monomer units including the acid and anhydride functional monomer units may be present at up to 70 weight percent of the (meth)acrylic polymer.

In one embodiment, the (meth)acrylic copolymer has a high Tg of greater than 115°C, more preferably greater than 120°C, greater than 125°C, greater than 130°C, greater than 135°C, and even greater than 140°C. Useful high Tg monomers include, but are not limited to tert-butyl cyclohexyl methacrylate, 3,3,5-trimethylcyclohexyl(meth)acrylate, alpha methyl styrene, maleimide, isobornyl methacrylate, norbornyl methacrylate, t-butyl methacrylate, cyclohexyl methacrylate, acrylamide and methacrylamide. The high Tg monomer units may be present at levels of 0 to 25 weight percent, and more preferably from 0 to 10 weight percent.

### Ionic crosslinking agent

The ionic crosslinking agent generally includes one or more metal salts and/or one or more metal oxides having a metal valence of 2 or greater. The metal may be any metal capable of forming two or more cationic groups that will form an ionic bond with anions formed from the acid and/or anhydride groups. The metal may be one or more transition metals, post transition metals, metalloids, and/or alkaline earth metals. Preferred metals include zinc, zirconium, aluminum, magnesium, calcium, and mixtures thereof. The metal is in the form of a salt or oxide which can form cations under reaction conditions, for the formation of the crosslinked polymers. The metal may be, for example, in the form of a metal carbonate, metal acetate, metal bicarbonate, metal oxide, metal hydroxide, metal carboxylate, metal acetylacetonate, metal of a fatty acid salt, or mixtures thereof.

Exemplary metal salts and/or metal oxides include, but are not limited to, zinc acetate, zinc acetylacetonate, zinc oxide, zinc oxalate, zinc carbonate, zinc hydroxide, zinc stearate, zinc citrate, zirconium acetate, zirconium oxide, aluminum acetate, calcium carbonate, and calcium stearate.

In one embodiment, the metal salt or metal oxide are part of a master batch that may be an admixture of other components useful in the composition. The master batch may also include, for example, additives, as listed below.

Additionally, the ionic crosslinking agent may be any basic species that can be protonated by the pendant acid or anhydride group to form an ion pair, that is capable of bonding together two different polymer chains.

The ionic crosslinking agent is present in the composition at from 0.01 to 20 weight percent, and preferably from 0.1 to 15 weight percent.

### Additives

The composition of the invention may be blended with typical additives used in thermoplastics. The additives may be added to the composition prior to crosslinking. Useful additives include, but are not limited to, fillers, surface modifying additives, nucleating agents, blowing agents, flow promoters, fibers, antioxidants, UV stabilizers, processing aids, fibers, lubricant agents, heat stabilizers, flame retardants, synergists, pigments and other coloring agents, and other compatible polymers.

If used, such additives are used at an effective amount to achieve the desired result. The amount may be 0.001 weight percent or greater, 0.01 weight percent or greater, 0.1 weight percent or greater, 1.0 weight percent or greater, 2.0 weight percent or greater, 3.0 weight percent or greater, and up to 40 weight percent or less, 30 weight percent or less, 20 weight percent or less, 15 weight percent or less, 10 weight percent or less, 5 weight percent or less, based on the weight of the whole composition.

In one preferred embodiment, the composition is impact modified. Useful impact modifiers include block copolymers, graft copolymers, and core/shell impact modifiers. The level of impact modifier can be adjusted to meet the toughness needs for the end use of the composition. In one embodiment, for compositions with high optical clarity, the impact modifiers are refractive-index matched to the matrix polymer. In this respect, refractive index matched means the difference in refractive index between the impact modifiers and matrix copolymer is plus or minus 0.02 or less, preferably less than 0.01, and most preferably less than 0.05. Impact modifiers may be present at from 0 to 60 weight percent, preferably from 1 to 55 weight percent, more preferably from 5 to 25 weight percent based on the weight of the whole copolymer composition.

Further, low Tg linear polymers may serve as impact modifiers. Certain copolymers, such as butyl acrylate-(meth)acrylic acid copolymer may act as an ionically crosslinked impact modifier.

Other polymer additives could include polycarbonates, polyurethanes, polysulfones, polyamides, polyolefin including copolymers and terpolymers based on these polymers, and including linear, branched, block, and grafted polymer structures. Examples of matting agents include, but are not limited to, crosslinked polymer particles of various geometries.

### CROSSLINKING

The (meth)acrylic copolymer having acid and/or anhydride groups is kept separate from the ionic crosslinking agent. The crosslinked copolymers may be formed by contacting the components under conditions described herein, to form a crosslinked copolymer.

The equivalent ratios of acid and/or anhydride groups on the (meth)acrylic copolymer to the ionic crosslinking agent may be selected so that when the components are reacted, crosslinked copolymers are formed. The ratio of the equivalents of acid or anhydride groups to the ionic crosslinking agent controls the level of crosslinking that may occur. By equivalents is meant the number of pendant acid or anhydride groups available to react with the metals. To form the crosslinked polymers, anions based on the acid or anhydride groups of the copolymer react with the cations formed from the metal salts and/or metal oxides that have valences of two or more. The extent of crosslinking is controlled by the lower amount of either acid or anhydride groups, or the amount of metal salts or metal oxides. The amount of acid or anhydride may be the limiting factor, or the amount of metal salts or metal oxides may be the limiting factor. The equivalents ratio of the metal salts or metal oxides to the acid or anhydride groups may be 1:40 or greater, 1:20 or greater, or 1:10 or greater. The equivalents ratio of acid or anhydride groups to the metal salts or metal oxides may be 1:40 or greater, 1:20 or greater, or 1:10 or greater.

One of ordinary skill in the art will understand that a variety of methods may be used to contact the copolymer and ionic crosslinking agent. Exemplary methods include during the polymerization process; by solution blending; and melt blending such as by extrusion, injection molding, foam extrusion, and sheet extrusion.

In a solution process, the acid and/or anhydride functional (meth)acrylic copolymer is dissolved in an organic solvent, then mixed with the ionic crosslinking agent. The (meth)acrylic copolymer and ionic crosslinking agent must be soluble in the organic solvent. The reaction crosslinking reaction occurs rapidly. The solvent is then removed. This method is useful, for example, in pultrusion and fiber-reinforced composites.

In melt blending, the copolymer and ionic crosslinking agent are melt blended, preferably under vacuum, and extruded or injection molded. The extruded product may be formed into granules, or be thermoformed. A limitation on this method is that the crosslink density is limited by the maximum torque of the processing equipment.

The temperature at which the components are contacted is from 180°C to 260°C, preferably 200°C to 250°C, and more preferably from 220°C to 245°C. The time of contact is long enough to allow for crosslinking of the copolymer chains by the ionic crosslinking groups. Preferably the contact time is from 0.1 to 10 minutes, preferably 0.3 to 5.0 minutes and more preferably from 0.5 to 3.0 minutes.

Acids or aldehydes are generated in the crosslinking process, and may be removed to drive the reaction to completion.

Crosslinking during the polymerization process involves polymerizing the monomers in the presence of the ionic crosslinking agent. The monomers and ionic crosslinking agent must be miscible. This method has the advantage of being a single unit operation. This method is useful in forming composites, for vacuum infusion, and for forming cast sheets.

In one exemplary embodiment, the crosslinking reaction occurs between 80-99.9 wt% of a free acid containing (meth)acrylic copolymer, and 0.1-20 wt% zinc acetate, as shown below:

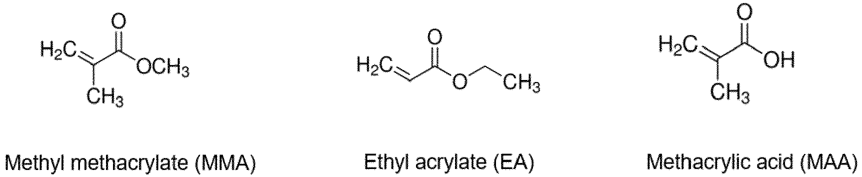

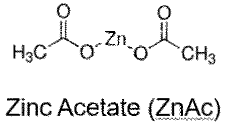

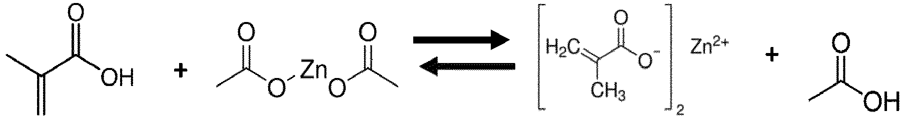

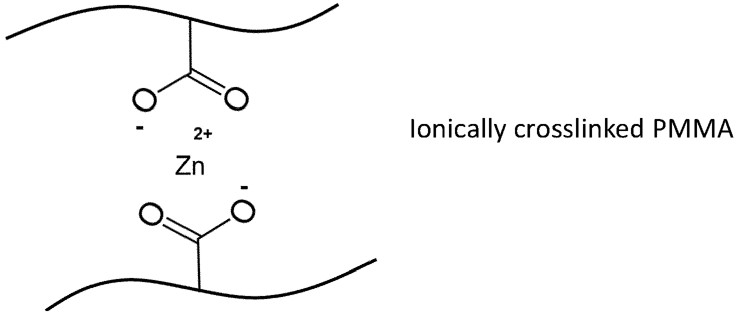

The (meth)acrylic copolymer that contains free acid groups, e.g. (meth)acrylic acid, and a multivalent metal salt, e.g. zinc acetate, may be melt blended by extrusion. Acetate ions exchange, and the zinc ion crosslinks the (meth)acrylic polymer chains. The acetic acid is then removed by vacuum. Addition of excess acetic acid reverses the crosslinked polymer back to the initial un-crosslinked state.

The crosslinks are reversible. Reversibility of the crosslinks facilitates processing of the copolymer composition. Reversibility may occur by subjecting the crosslinked copolymer to a temperature at which the ionic bonds are broken under shear, or by contacting the composition with excess equivalents of an acid or aldehyde, such that the crosslinks are reversed. Generally, the temperature used to break the crosslinks is from 180°C to 260°C, preferably 190°C to 255°C, and more preferably from 200°C to 250°C. Crosslinks can also be broken or reversed by addition of an acid or aldehyde. Exemplary acids include, but are not limited to acetic acid, carboxylic acids of the formula CH₃(CH₂)ₙCOOH where n is from 1 to 20, and trifluoro acetic acid, or mixtures thereof. Any ratio of acid or aldehyde to the crosslinked copolymer, that causes the crosslinks to be broken may be used. The equivalents of acid or aldehyde to crosslinked polymer is from 1:1 to 10,000: 1, preferably from 5:1 to 5,000:1, and more preferably from 10:1 to 4,000: 1. The process of reversing the crosslinking takes place until the solution viscosity of the copolymer is substantially the same after the crosslinking is reversed as it was before crosslinking. By substantially the same is meant that the solution viscosity after crosslink reversal is with 5 percent of the original solution viscosity before crosslinking.

### PROPERTIES

The compositions disclosed herein provide high molecular weight resins with processability. Advantages of the compositions include one or more of:
- Increased creep, chemical and scratch resistance.
- Potential to produce super-tough (meth)acrylic thermoplastics.
- Reversible thermoset properties. This provides for sustainability, and recyclability.
- Increased melt strength, providing better performance in thermoforming.

### APPLICATIONS

The composition of the claims can be used in any application where thermoplastics and thermosets are used by combining the properties of both thermoplastics and thermosets for a crosslinked system that is fully reversible.

One useful application is in products that require strong material properties, but can be recycled. The crosslinking provides properties of a very high molecular weight polymer, yet is recyclable by reversing the crosslinks. In a composite, fibers and non-plastic materials can be recovered.

Another useful application is in materials demanding a high resistance to creep and where the cross over to thermoset-like properties is desired. This includes composites using glass fiber, carbon fiber, natural fiber or combinations thereof. The fiber materials can be oriented, unidirectional or woven in one or more layers.

In addition to composites, the composition of the claims is useful in cast or extruded sheets, thermoformed articles, injection molded articles (to reduce cycle time), toys, automotive parts, RVs, solar panels, windmills, constructional parts, medical devices, electronic devices, printed circuit boards, implants, robotics, household appliances, kitchenware, display devices, etc.

### EXAMPLES

Melt flow rate (MFR) measurement: Instron Ceast MF30 equipment was used for polymers in melt flow rate measurements. The die temperature was controlled at 230°C while the loading cell weight was at 3.8kg. The dried pellets were used near 20°C below the T_{g} over 8 hours.

Gel permeation chromatography (GPC): Waters Alliance 2695 and Waters Differential Refractometer 2410 were used to make polymer molecular weight measurements (Mw, Mn, Mz). Columns were based on two PL Gel mixed C columns and a guard column (7.8 mm I.D. × 30 cm, 5 µm). THF (HPLC grade) was selected as a solvent. Temperature was controlled at 35 °C. Ten poly(methyl methacrylate) standards were used in the calibration, ranging in Mₚ (peak molecular weight) from 550 to 1,677,000 g/mole.

Differential scanning calorimetry (DSC) for weight average molecular weigth (Mw), number average molecular weight (Mn) and Z average molecular weight (Mz): The glass transition temperatures of (meth)acrylic polymers were measured at a heating rate of 10°C/minutes in N₂ using TA instruments Q2000 DSC, during the second heating. The first heating was used to heat the sample to 170°C at a heating rate of 10°C/minute, then, the sample was cooled down to 0°C at a cooling rate of 10°C/minute. The sample weight was controlled at 5-10 mg.

Tensile strength and elongation: The tensile strength, modulus and elongation of the tensile bars was evaluated using Instron Model 4202 at the crosshead speed of 5mm/minute using ASTM D638 method after being preconditioned at 23°C/48 hours. The tensile was at 6" in length while the width was at 0.50". The sample thickness was at 0.125".

Vicat softening temperatures: The samples were tested in Instron HV6M under 10N and 50N external forces using ASTM method D1525. The sample heating rate was controlled at the speed of 50°C/hour. The injection molded samples were annealed at ∼20C below the Tg value for 16 hours and were kept in a desiccator oven before testing.

Solution viscosity was measured with Brookfield-Spindle 3 at 100rpm unless mentioned otherwise.

Torque: The torque value is read from the gauge on the Person-Machine Interface (PMI) (aka user interface). This is a percentage value of the maximum torque. Power [kW] = torque [N.m] * RPM [RPM] / 9550. At a constant RPM, torque % is directly correlated with power consumption. Increased melt viscosity means increased power to keep up with the RPM. Ionic crosslinking, although reversible, increases melt viscosity of the polymer. Therefore, the torque limit or power limit of the extruder may limit increasing the ionic crosslinking density beyond a threshold value.

Storage modulus: Dynamic mechanical measurement in torsion according to ASTM D5279-13.
Sample dimensions 10 × 4 × 25 mm. Temperature sweep -150°C up to 170°C.
Oscillation frequency 10 rad/s, applied strain 0.1%. Normal force = -1N

HDT: Flatwise HDT according to ISO 75-1 and ISO 75-2. Load 1.80 MPa (method A), heating rate 120 °C/hr. Specimen dimensions 10 × 4 × 80 mm. Support distance 64 mm. End of test defined at 0.2% strain.

### Dynamic Melt Rheology (melt viscosity)

Parallel plate method according to ASTM D4440-07. Plate diameter 25 mm, measurement gap 1.000 mm. Frequency sweep logarithmic from 628.13 to 0.314 rad/s at desired temperature. Applied strain 1%.

### Materials

The materials listed in Table 1 are commercial methyl methacrylate copolymers with methacrylic acid (MAA) and ethyl acrylate (EA) (Altuglas^{®} resins) from Trinseo. Zinc acetate dihydrate, Zn(OAc)2, was used as received. Altuglas^{®} V825T was used as the non-functional reference poly(methyl methacrylate) (pMMA).

**Table 1. Name, chemical composition, and characteristic properties of PMMA grades**

| Grade | **EA (wt%)** | **MAA (wt%)** | **MFR 230°C/** 3.8 kq | **Vicat 50N (°C)** | **HDT 1.82Mpa (°C)** | **Tg (°C)** | **Mn (kDa)** | **Mw (kDa)** | **Mz (kDa)** |
|---|---|---|---|---|---|---|---|---|---|
| PMMA-1 granules | 4 | 0 | 3 | 106 | 100 | 113 | 47 | 90 | 142 |
| PMMA-2 beads | 10 | 1.5 | 10 | --- | --- | 100 | 52 | 99 | 154 |
| PMMA-3 granules | 0 | 4 | 1.5-2 | 120 | 110 | 121 | 44 | 83 | 127 |
| PMMA-4 beads | 0 | 12 | 3 | --- | --- | 133 | 29 | 53 | 81 |

### Example 1: Ionic crosslinking in solution

A 15g polymer sample was dissolved in 150g dichloromethane (DCM), zinc acetate (ZnAc) or zinc acetyl acetonate (ZnAcAc) was added and the mixture was shaken (IKA shaker) in a bottle for 72h at room temperature. All methacrylic acid (MAA)-containing samples revealed increased solution viscosities. PMMA-3 and PMMA-4 showed the most significant changes after Zn-salt addition and their viscosities reversed back with the addition of excees acetic acid. This proved the formation of reversible ionic crosslinking to form PMMA-ionomers. Results are summarized in Table 2.

**Table 2. pMMA-ionomers were prepared in DCM, reversibility of ionic crosslinking proven by the change in solution viscosity**

| **Grade** | **ZnAc 2 wt%** | **Solution viscosity without Zn** | **Observation as Zn added** | **Solution viscosity with Zn** | **Solution viscosity after acetic acid** |
|---|---|---|---|---|---|
| PMMA-1 granules | 3 | 16 cP | dissolves | 16 cP | 12 cP |
| PMMA-2 beads | 1.05 | 25 cP | dissolves | 90 cP | 16 cp |
| PMMA-3 granules | 2.8 | 40 cP | Viscosity increase | 6200 cP | 13 cP |
| PMMA-4 beads | 8.4 | 120 cP | Gelled completely | gel | 16 cP |

### Example 2. Production of PMMA-ionomers by extrusion

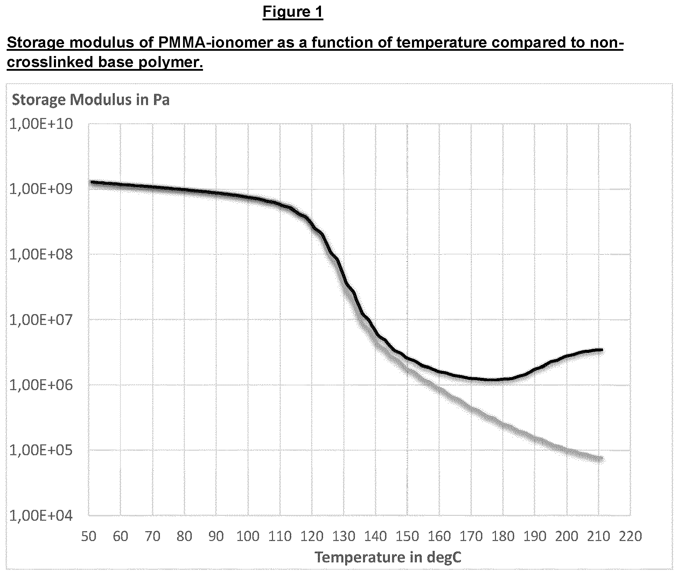

A 50g polymer sample was extruded in a ThermoFisher Haake Minilab twin screw extruder with zinc acetate at 200rpm and 250°C. Torque was recorded after the zinc acetate addition. PMMA-4, with the highest MAA level, showed significant increase in torque during extrusion, showing the formation of strong bonds and an increase in molecular weight of the polymer. Results are summarized on Table 3. Ionically crosslinked polymers showed significantly increased melt stregnth while preserving the processability as shown in Figure 1.

**Table 3. PMMA-ionomers were prepared by Haake Minilab twin screw extruder**

| **Grade** | **Intake ZnAc (g) @50g sample** | **Torque N/cm** | **Die Swell** | **Appearance** |
|---|---|---|---|---|
| PMMA-1 granules | 1.5 | Ca 100/200 | --- | semitransparent |
| PMMA-2 beads | 0.52 | Ca 100/200 | --- | crystal clear |
| PMMA-3 granules | 1.4 | Ca 250 | mild | crystal clear |
| PMMA-4 beads | 4.2 | >>550 High torque | severe | severe melt fracture |
| PMMA-4 beads | 2 | >>500 High torque | high | melt fracture |
| PMMA-4 beads | 1 | Ca 400 | mild | foaming |

### Example 3. Production of PMMA-ionomers in-situ during Polymerization:

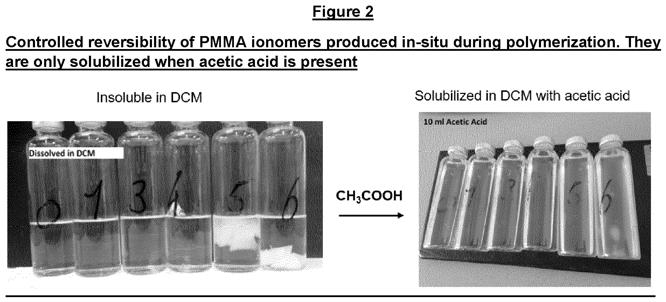

Methyl methacrylate (MMA) was polymerized in the presence of methacrylic acid (MAA) and a Zn-salt to test the in-situ ionomer formation during polymerization. Monomer ratios were used as given on below table. MAA/Zn ratio in each case was kept constant at 2/1. Polymerization was carried out in sealed vials without agitation. Chemical initiators or chain transfer agents were not used. Total feed content was 25g per vial. The results are shown in Figure 2.

**Table 4. Composition of MMA-MAA-Zn PMMA ionomers**

| **Sample** | **MMA, g** | **MAA, g** | **ZnAc, g** |
|---|---|---|---|
| **0** | 25 | 0 | 0 |
| **1** | 14.875 | 0.125 | 0 |
| **2** | 24.875 | 0.125 | 0.1375 |
| **3** | 25.75 | 0.25 | 0.12675 |
| **4** | 24.5 | 0.5 | 0.535 |
| **5** | 13.75 | 1.25 | 13.375 |
| **6** | 22.5 | 2.5 | 2.675 |

**Table 5. Change in solubility and molecular weight after polymerization and decrosslinking by acetic acid. Solubility was measured by the area under the molecular weight distribution curve in GPC**

| | **After polymerization** | | | | **+ acetic acid** | | | |
|---|---|---|---|---|---|---|---|---|
| | **Solubility (%)** | **Mn (kDa)** | **Mw (kDa)** | **Mz (kDa)** | **Solubility (%)** | **Mn (kDa)** | **Mw (kDa)** | **Mz (kDa)** |
| **MMA** | 100 | 434 | 997 | 1462 | 100 | 643 | 1287 | 1938 |
| **MMA-MAA5** | 10 | 246 | 1014 | 1421 | 100 | 576 | 1232 | 1896 |
| **MMA-MAA10** | 2 | - | - | - | 100 | 783 | 1338 | 1910 |
| **MMA-MAA5-Zn** | - | - | - | - | 100 | 780 | 1368 | 2024 |
| **MMA-MAA10-Zn** | - | - | - | - | 100 | 624 | 1307 | 1934 |

### Example 4. Full-Cycle reversibility tests for PMMA ionomers:

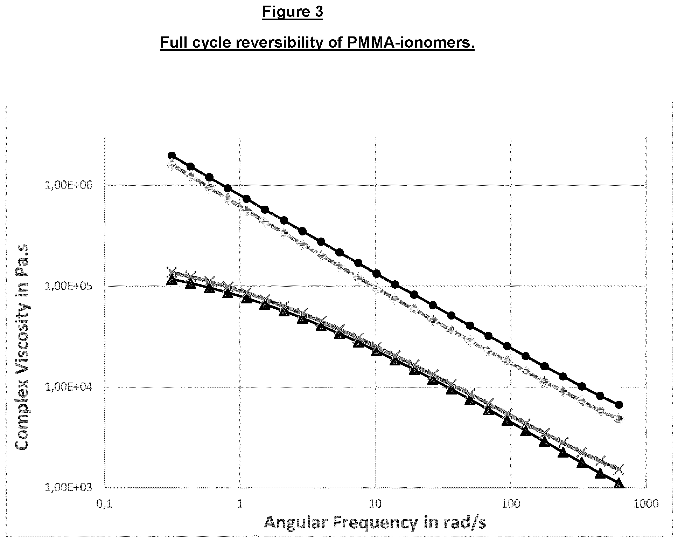

PMMA-3 and PMMA-4 were crosslinked in DCM by ZnAcAc. Acid/Zn was used in ratio of 2/1. After the crosslinking finished, the gelled network was de-crosslinked using excess AcAc. Volatiles were removed in a vacuum oven in this material that contains all crosslinking and de-crosslinking components. As seen from the shear rate dependence of melt viscosity measurement de-crosslinked material goes back to its original state similar to the Altuglas^{®} PMMA-3 and PMMA-4. Data proves that these materials can be recycled by crosslinking/decrosslinking multiple times. Figure 3.

While the disclosure has been described in connection with specific embodiments, it is understood that the disclosure is not to be limited to the disclosed embodiments, but rather is intended to cover various modifications and equivalent arrangements included within the scope of the claims, which scope is to be accorded the broadest interpretation so as to encompass such modifications and equivalent structures.

## Claims

1. A reversibly crosslinkable (meth)acrylic copolymer composition, comprising:
a) (meth)acrylic copolymer chains comprising from 60 to 99.9 weight percent, preferably from 75 to 99 weight percent, and most preferably from 80 to 95 weight percent methyl methacrylate monomer units and 0.01 to 20, preferably 0.1 to 15 weight percent of unsaturated acid or anhydride monomer units having pendant acid and/or anhydride groups, and optionally from 0.1 to 25 weight percent other monomers polymerizable with said methyl methacrylate and unsaturated acid or anhydride monomer;
b) 0.01 to 20 weight percent, more preferably 0.1 to 15 weight percent of one or more ionic crosslinking agents, wherein said crosslinking agents comprise at least one metal cation group, wherein said metal cation group has a valence of 2 or greater;
wherein at least a portion of said (meth)acrylic copolymer is capable of forming crosslinks with pendant unsaturated acid or anhydride monomer units on other polymer chains by ionic bonding or complexation with said ionic crosslinking agent to form a crosslinked copolymer.

2. The reversibly crosslinkable (meth)acrylic copolymer composition of claim 1, wherein said crosslinks between said acrylic copolymer chains are reversible, and wherein the weight average molecular weight of the copolymer chains before crosslinking and after breaking the crosslinks is substantially the same.

3. The reversibly crosslinkable (meth)acrylic copolymer composition of claim 1, wherein the melt viscosity of said (meth)acrylic copolymer chains after crosslinking is at least 10 percent higher than the (meth)acrylic copolymer chain melt viscosity prior to crosslinking, when measured at 0.314 s angular frequency at 200°C.

4. The reversibly crosslinkable (meth)acrylic copolymer composition of claim 1, wherein said metal cation group is a metal salt selected from one or more salts of transition metals, metalloids, and alkaline earth metals, preferably selected from zinc, zirconium, aluminum, magnesium and calcium.

5. The reversibly crosslinkable (meth)acrylic copolymer composition of claim 1, wherein the solution viscosity, measured at 23°C at 10 weight percent in dichloromethane of the crosslinked (meth)acrylic copolymer is at least 100 percent greater than the solution viscosity of the uncross-linked (meth)acrylic copolymer.

6. The reversibly crosslinkable (meth)acrylic copolymer composition of claim 1, wherein the equivalents ratio of metal ions to equivalents of anions formed from pendant acid or anhydride groups on the copolymer is from 40:1 to 1:40.

7. The reversibly crosslinkable (meth)acrylic copolymer composition of claim 1, wherein said composition further comprises from 1 to 60 weight percent of impact modifiers, preferably from 5 to 25 weight percent of impact modifiers, based on the weight of the whole copolymer composition.

8. The reversibly crosslinkable (meth)acrylic copolymer composition of claim 1, wherein said ionic crosslinking agent is selected from the group consisting of metal carbonate, metal acetate, metal bicarbonate, metal oxide, metal hydroxide, metal carboxylate, metal acetylacetonate, metal of a fatty acid salt, zinc acetate, zinc oxide, zinc carbonate, zinc hydroxide, zinc stearate, zinc citrate, zirconium acetate, zirconium oxide, aluminum acetate, calcium carbonate, and calcium stearate, and mixtures thereof.

9. A method for preparing a reversibly crosslinked (meth)acrylic from the reversibly crosslinkable (meth)acrylic copolymer composition of claims 1 to 9, comprising contacting said (meth)acrylic copolymer having unsaturated acid or anhydride monomer units with pendant acid or anhydride groups, with one or more ionic crosslinking agents under conditions such that a portion of the pendant acid or anhydride groups is crosslinked with other (meth)acrylic copolymer chains.

10. The method of claim 9, wherein said (meth)acrylic copolymer is dissolved in an organic solvent and mixed with said ionic crosslinking agent.

11. The method of claim 9, wherein said (meth)acrylic copolymer is melt blended with said ionic crosslinking agent under vacuum.

12. The method of claim 9, wherein said methyl methacrylate, unsaturated acid and/or anhydride monomer and optional other monomers polymerizable with methyl methacrylate and said unsaturated acid and/or anhydride are polymerized in the presence of said ionic crosslinking agent.

13. The reversibly crosslinkable (meth)acrylic copolymer composition of claim 1, wherein said composition is part of a composite, cast or extruded sheets, thermoformed articles, injection molded articles, toys, automotive parts, recreational vehicles, solar panels, windmills, constructional parts, medical devices, electronic devices, printed circuit boards, implants, robotics, household appliances, kitchenware, or display devices.

14. A composition comprising one or more (meth)acrylic copolymer chains, the copolymer having 0.1 to 20 weight percent, more preferably 0.1 to 15 weight percent of one or more unsaturated acids and/or anhydrides, wherein the acid and/or anhydride are pendant from the copolymer; wherein a portion of the copolymer chains are crosslinked with other copolymer chains by i) ionic bonding of anions formed from the pendant acid or anhydride groups with a metal cation having a valence of two or greater, or ii) a complexation between pendant acid or anhydride groups with metal oxides.

15. The composition of claim 14, wherein the crosslinks are reversible, and the weight average molecular weight of the copolymer is substantially the same after the crosslinking is reversed as it was before crosslinking.
